# EUROPÄISCHE PATENTANMELDUNG

(11) **EP 2 448 375 A2**
(43) Veröffentlichungstag der Anmeldung: **02.05.2012**
(21) Anmeldenummer: 11186309.8
(22) Anmeldetag: 24.10.2011
(51) Int. Cl.: H05B 41/288, H05B 41/38

(54) **Zündschaltungsanordnung zum Zünden einer Entladungslampe wie einer Hochdrucklampe**

(30) Priorität: 28.10.2010 DE 102010043081
(71) Anmelder: BAG engineering GmbH, 59759 Arnsberg (DE)
(72) Erfinder: Kremer, Thomas, 57392 Schmallenberg (DE); Michaelis, Wolfgang, 59519 Möhnesee (DE); Schreyer, Günter, 59581 Warstein (DE); Schulte, Tobias, 59872 Meschede (DE)
(74) Vertreter: Lippert, Stachow & Partner

(57) **Zusammenfassung**

Um ein sicheres Zünden einer Entladungslampe (1) wie einer Hochdrucklampe bereitzustellen wird eine Zündschaltungsanordnung (ZA) beschrieben mit einer Steuereinrichtung zum Zünden der Lampe, wobei eine Temperatursensoreinrichtung (12) zur Erfassung einer Temperatur vorgesehen ist sowie ein Speichermittel zum Speichern von Information bezüglich der Abhängigkeit wenigstens eines einzustellenden Betriebsparameters der Zündschaltungsanordnung von der erfassten Temperatur. Die Zündschaltungsanordnung (ZA) zeichnet sich dadurch aus, dass eine Zündimpulsauslöseschaltung (7, 8, 9a, 10) und einem Zündübertrager (9) umfasst ist, der primärseitig mit der Zündimpulsauslöseschaltung und sekundärseitig mit der Lampe (1) verbunden ist, wobei die Zündimpulsauslöseschaltung eine Eingangsenergiequelle sowie ein Schaltermittel aufweist, und wobei die Temperatursensoreinrichtung (12) zur Erfassung der Temperatur am Zündübertrager ausgebildet ist, und dass die Steuereinrichtung (6) ausgebildet ist, in Abhängigkeit von der ermittelten Temperatur am Zündübertrager und der abgespeicherten Information den wenigstens einen Betriebsparameter einzustellen. (Fig.1)

## Beschreibung

Die Erfindung betrifft eine Zündschaltungsanordnung zum Zünden einer Entladungslampe wie einer Hochdrucklampe mit einer Steuereinrichtung zum Zünden der Lampe, wobei eine Temperatursensoreinrichtung zur Erfassung einer Temperatur vorgesehen ist sowie ein Speichermittel zum Speichern von Information bezüglich wenigstens eines einzustellenden Betriebsparameters der Zündschaltungsanordnung in Abhängigkeit der erfassten Temperatur. Die Erfindung betrifft ferner ein Verfahren zum Betrieb einer solchen Zündschaltungsanordnung.

Eine gattungsbildende Zündschaltungsanordnung ist beispielsweise aus der EP 1 871 147 B1 bekannt. Dabei umfasst das bekannte elektronische Vorschaltgerät für die Lampe einen Wechselspannungsgenerator, der zum Zünden und Betreiben der Entladungslampe eine Wechselspannung mit verschiedenen Frequenzen bereitstellt, wobei eine Steuereinheit die Steuersignale für den Wechselspannungsgenerator erzeugt, mit denen die Frequenz der Wechselspannung für die Lampe festgelegt wird. Ein Temperatursensor erfasst die Umgebungstemperatur, wobei die Zündfrequenz und damit die Zündspannung abhängig von der Umgebungstemperatur abhängig eingestellt bzw. verändert werden. Eine solche Vorrichtung wird beispielsweise auch in der DE 39 10 900 A1 offenbart. Dabei liegt dem Lastkreis des Wechselrichters eine Serienschaltung aus einer Drossel und einem Kondensator zugrunde, zu dem die Lampe parallel geschaltet ist. Die Frequenz des Wechselrichters wird zum Zünden der Lampe in Richtung auf die Resonanzfrequenz hin abgesenkt, welche im Wesentlichen durch die Drossel und den Kondensator bestimmt ist. Die Resonanzspannungserhöhung am Kondensator führt letztlich zum Zünden der Röhre. Auch dieses Dokument lehrt, die Frequenz des Wechselrichters und damit die Zündspannung abhängig von der Umgebungstemperatur der Lampe einzustellen. Die beschriebenen Gestaltungen der gattungsgemäßen Anordnungen sind der Erkenntnis geschuldet, dass die jeweils erforderliche Zündspannung der Lampen temperaturabhängig ist.

Neben den beschriebenen Anordnungen, bei welchen die angeschlossenen Entladungslampen mittels einer Resonanz-Spannungsüberhöhung gezündet werden, sind auch Zündschaltungsanordnungen mit einem Zündübertrager bekannt, der primärseitig mit einer Zündimpulsauslöseschaltung und sekundärseitig mit der Lampe verbunden ist. Um bei jeden Betriebsbedingungen und insbesondere bei allen möglichen Betriebstemperaturen ein sicheres Zünden der Lampe bereitzustellen, werden die Betriebsparameter der Zündschaltungsanordnung so eingestellt, dass in einem vorgegebenen Temperaturintervall in jedem Fall das Zünden der Lampe erfolgt. Dies führt jedoch dazu, dass in bestimmten Betriebssituationen extrem hohe Zündspannungen erzeugt werden, die zum Zünden der Lampe nicht benötigt werden und letztlich allein einen höheren Verschleiß der Lampe selbst sowie der peripheren Bauelemente zur Folge haben.

Insofern liegt der Erfindung die Aufgabe zugrunde, eine gattungsbildende Zündschaltungsanordnung so weiterzubilden, dass auch beim Vorhandensein eines Zündübertragers eine möglichst schonende Behandlung der Lampe sowie der peripheren Bauelemente gewährleistet ist.

Diese Aufgabe löst die Erfindung vorrichtungsseitig mit einer Zündschaltungsanordnung mit den Merkmalen von Anspruch 1. Die erfindungsgemäße Zündschaltungsanordnung zeichnet sich dadurch aus, dass eine Zündimpulsauslöseschaltung und ein Zündübertrager vorgesehen ist, der primärseitig mit der Zündimpulsauslöseschaltung und sekundärseitig mit der Lampe verbunden ist, wobei die Zündimpulsauslöseschaltung eine Eingangsenergiequelle sowie ein Schaltermittel aufweist, und wobei die Temperatursensoreinrichtung zur Ermittlung der Temperatur am Zündübertrager ausgebildet ist und dass die Steuereinrichtung ausgebildet ist in Abhängigkeit von der ermittelten Temperatur am Zündübertrager und der abgespeicherten Information den wenigstens einen Betriebsparameter einzustellen.

Dadurch, dass die Temperatur am Zündübertrager, insbesondere die Temperatur des Kerns des Zündübertragers bei einer Zündschaltungsanordnung erfasst wird, kann bei der Erzeugung des jeweiligen Zündimpulses der Einfluss der Temperatur auf das Übertragungsverhalten, insbesondere auf die Spannungshöhe des erzeugten Zündimpulses berücksichtigt werden, sodass letztlich die Erzeugung von unnötig hohen Zündimpulsen vermieden werden kann. Ein solcher Kern des Zündübertragers kann beispielsweise ein Ferritmaterial, ein Aluminiummaterial oder ein Eisenmaterial umfassen.

Es sei darauf hingewiesen, dass das Einstellen des wenigstens einen Betriebsparameters insbesondere das Steuern oder Regeln dieses Betriebsparameters umfassen kann. Ferner umfasst die Angabe "Ermittlung der Temperatur am Zündübertrager" sowohl die explizite Messung der Temperatur am Ort des Zündübertragers als auch eine Berechnung oder Abschätzung der Temperatur am Zündübertrager auf der Basis einer Temperaturmessung an einem anderen Ort der Zündschaltungsanordnung bzw. am oder im Gehäuse der besagten Zündschaltungsanordnung. In jedem Fall wird ein bestimmter Temperaturwert am Zündübertrager ermittelt oder festgestellt, welcher von der Steuereinrichtung dann zur Einstellung des wenigsten einen Betriebsparameters der Zündschaltungsanordnung verwendet werden kann.

Durch die Berücksichtigung der Temperaturabhängigkeit des Übertragers, insbesondere der Temperaturabhängigkeit der Magnetisierung des Übertragers kann viel genauer ein vorgegebener Spannungsimpuls zur Zündung der Lampe erzeugt werden. Hierdurch entfällt eine ansonsten notwendige Überdimensionierung von elektronischen Bauteilen, ferner werden diese Bauteile auch geringer belastet, sodass letztlich Kosten eingespart werden können.

Zweckmäßigerweise umfasst die Zündimpulsauslöseschaltung einen steuerbaren Spannungsregler, der insbesondere einen Stoßkondensator der Zündimpulsauslöseschaltung speist, sodass über den steuerbaren Spannungsregler die Erzeugung des Zündimpulses und insbesondere die Höhe des Zündimpulses einstellbar ist. Insofern kann der oben stehend angegebene Betriebsparameter beispielsweise die Ausgangsspannung des steuerbaren Spannungsreglers sein und/oder die Ladezeit, innerhalb dessen der Stoßkondensator vom Spannungsregler gespeist wird.

In einer zweckmäßigen Ausführungsform kann der Zündübertrager in einem Gehäuse angeordnet sein, wobei zumindest ein Fühler der Temperatursensoreinrichtung an oder in dem Gehäuse angeordnet ist. Dabei kann der Fühler vorzugsweise mit gutem Wärmekontakt am Zündübertrager angebracht sein, insbesondere am Kern des Zündübertragers. Hierzu eignen sich beispielsweise eine Wärmeleitpaste oder ein Wärmeleitkleber.

Die Speicherung der Information bezüglich der Abhängigkeit des wenigstens einen einzustellenden Betriebsparameters von der Temperatur kann beispielsweise in Form einer Kennlinie, einer Mehrzahl von Wertepaaren oder auch in Form einer Lookup-Tabelle in einem zugeordneten Speichermittel durchgeführt sein. Dabei kann die Steuereinrichtung eingerichtet sein, um aus den abgelegten Daten bei erfassten Zwischenwerten wie Temperaturzwischenwerten eine Interpolation durchzuführen.

In einer weiteren vorteilhaften Ausführungsform kann die Temperatursensoreinrichtung auch ausgebildet sein, die Lampentemperatur zu erfassen, beispielsweise mittels eines direkt an der Lampe angebrachten Messfühlers. Damit liegt sowohl die Temperatur der Lampe als auch die Temperatur am Zündübertrager vor, womit einerseits die Abhängigkeit der ausreichenden Zündspannung von der Temperatur der Lampe und andererseits der Einfluss der Temperatur des Zündübertragers auf dessen Übertragungsverhalten und damit die Erzeugung des Zündimpulses berücksichtigt werden kann.

Verfahrensseitig löst die Erfindung die obige Aufgabe mit einem Verfahren zum Betrieb einer Zündschaltungsanordnung zum Zünden einer Entladungslampe, insbesondere einer Hochdrucklampe, wobei vorbestimmte Information bezüglich wenigstens eines in Abhängigkeit von einer Temperatur einzustellenden Betriebsparameters der Zündschaltungsanordnung gespeichert wird. Das erfindungsgemäße Verfahren zeichnet sich dadurch aus, dass mittels einer Zündimpulsauslöseschaltung ein primärseitiger Impuls erzeugt wird, welcher mittels eines Zündübertragers transformiert und auf die Lampe übertragen wird, wobei ein Schalter der Zündimpulsauslöseschaltung zum Erzeugen des primärseitigen Zündimpulses angesteuert wird, und wobei die Temperatur am Zündübertrager ermittelt wird und eine Steuereinrichtung in Abhängigkeit der ermittelten Temperatur am Zündübertrager und der abgespeicherten Information den wenigstens einen Betriebsparameter einstellt, d.h. steuert oder regelt. Mit der Erfindung ist es beispielsweise beim Betrieb einer vorgegebenen Lampe möglich, die Toleranz der Zündspannung von etwa 15 kV auf etwa 4 kV zu reduzieren, was eine erhebliche Vereinfachung der notwendigen Schaltungstechnik nach sich zieht.

Besonders zweckmäßig kann es sein, wenn durch die Steuerung des Betriebsparameters eine Temperaturabhängigkeit der Magnetisierung bzw. der Permeabilität des Kerns des Zündübertragers kompensiert wird. Dabei kann diese Einstellung gerade so erfolgen, dass innerhalb eines vorgegebenen Intervalls der Temperatur des Zündübertragers, insbesondere des Kerns des Zündübertragers, die mittels des Übertragers an der Lampe erzeugte Zündspannung konstant bleibt. Dementsprechend ändert sich das Übertragungsverhalten des Zündübertragers in dem betrachteten Temperaturintervall der Temperatur des Zündübertragers nicht, dessen Temperaturabhängigkeit kann gerade kompensiert werden.

Zweckmäßigerweise wird vor der Erzeugung des primärseitigen Zündimpulses ein Stoßkondensator in der Zündauslöseschaltung aufgeladen, wobei die Aufladung in Abhängigkeit der ermittelten Temperatur am Zündübertrager durchgeführt wird. Insbesondere kann die Ladespannung und/oder die Ladedauer in Abhängigkeit der Temperatur am Zündübertrager eingestellt werden.

Zur Ermittlung der Temperatur am bzw. im Zündübertrager kann die Temperatur benachbart zu oder am bzw. im Zündübertrager gemessen werden. Andererseits ist es jedoch auch möglich, dass eine Temperaturmessung benachbart zu oder an der Lampe gemessen wird und mittels eines vorgegebenen Wärmetransportmodells auf die Temperatur am Zündübertrager geschlossen wird.

Zweckmäßigerweise wird der wenigstens eine Betriebsparameter so eingestellt, dass der Einfluss der ermittelten Temperatur bzw. Temperaturen auf den Zündvorgang im Wesentlichen kompensiert wird. Insofern kann nicht nur der Einfluss des Zündübertragers auf die Erzeugung des Zündimpulses, sondern auch der Einfluss weiterer Bauteile beim Einstellen des wenigstens einen Betriebsparameters berücksichtigt werden.

Je nach Ausführungsform kann der einzustellende Betriebsparameter der Zündschaltungsanordnung beispielsweise die Ausgangsspannung eines Spannungsreglers zum Laden eines Stoßkondensators, die Kapazität des Stoßkondensators, die Anzahl aufeinander folgender Zündimpulse und/oder die Wartezeit zwischen zwei Zündversuchen in Abhängigkeit der ermittelten Temperatur am Zündübertrager oder auch die Ladezeit zum Laden des Stoßkondensators eingestellt werden.

Besonders zweckmäßig ist es, wenn sowohl die Temperatur am Zündübertrager als auch die Temperatur der Lampe mit unterschiedlichen Mitteln ermittelt werden und der wenigstens eine Betriebsparameter in Abhängigkeit der beiden ermittelten Temperaturen eingestellt, d.h. gesteuert oder geregelt werden. Die Angabe "unterschiedliche Mittel" bedeutet dabei, dass die beiden Temperaturen unabhängig voneinander, z.B. mit unterschiedlichen Messfühlern erfasst werden können. Ein solches Verfahren weist den großen Vorteil auf, dass einerseits die Abhängigkeit der Zündspannung zum sicheren Zünden der Lampe von der Temperatur der Lampe und andererseits das temperaturabhängige Übertragungsverhalten des Zündübertragers beim Einstellen der Zündschaltungsanordnung zu deren Betrieb berücksichtigt werden können, sodass letztlich sichergestellt ist, dass die notwendige Höhe des Zündimpulses in jeder Betriebssituation eingestellt ist, ohne dass die Bauteile wie die Lampe bzw. die peripheren elektronischen Bauteile unnötig durch zu hohe Spannungsimpulse belastet werden.

Überaus zweckmäßig kann es sein, wenn auch die Kapazität der Lampe ermittelt und bei der Festlegung des zumindest einen Betriebsparameters mit berücksichtigt wird. Die Kapazität der Lampe kann auf herkömmliche Weise ermittelt werden. Sie ändert sich nutzungsbedingt, und kann einen Einfluss auf die notwendige Höhe der Zündspannung haben. Insofern kann der wenigstens eine Betriebsparameter der Zündanordnung in diesem Fall auch in Abhängigkeit der ermittelten Kapazität der Lampe eingestellt, insbesondere gesteuert oder geregelt werden. Hierdurch kann neben einer Temperaturabhängigkeit der Zündspannung der Lampe auch eine Abhängigkeit der Zündspannung von der aktuellen Kapazität der Lampe berücksichtigt werden.

Wird die Festlegung des wenigsten einen Betriebsparameters sowohl von der Temperatur am Zündübertrager, von der Temperatur der Lampe und von der Kapazität der Lampe abhängig gemacht, können bei dieser Ausführungsform Information in Form eines vier-dimensionalen Datenfeldes hinterlegt sein, mit welchem den drei gegebenen Werten Temperatur am Zündübertrager, Temperatur der Lampe und Kapazität der Lampe ein Wert für den zumindest einen Betriebsparameter zugeordnet ist. Zwischenwerte können bei dieser Ausführungsform beispielsweise durch Interpolation ermittelt werden. Andererseits ist es beispielsweise auch möglich, den zumindest einen Betriebsparameter mittels eines in der Steuereinrichtung hinterlegten Polynoms zu berechnen, wobei die drei gegebenen Parameter als Variablen in das Polynom eingesetzt werden.

Die Erfindung wird im Folgenden durch Bezugnahme auf die beiliegenden Figuren durch das Beschreiben einiger Ausführungsformen erläutert, wobei
- Figur 1: eine erfindungsgemäße Schaltungsanordnung, und
- Figur 2: den Ablauf eines erfindungsgemäßen Verfahrens in einem Flussdiagramm
zeigt.

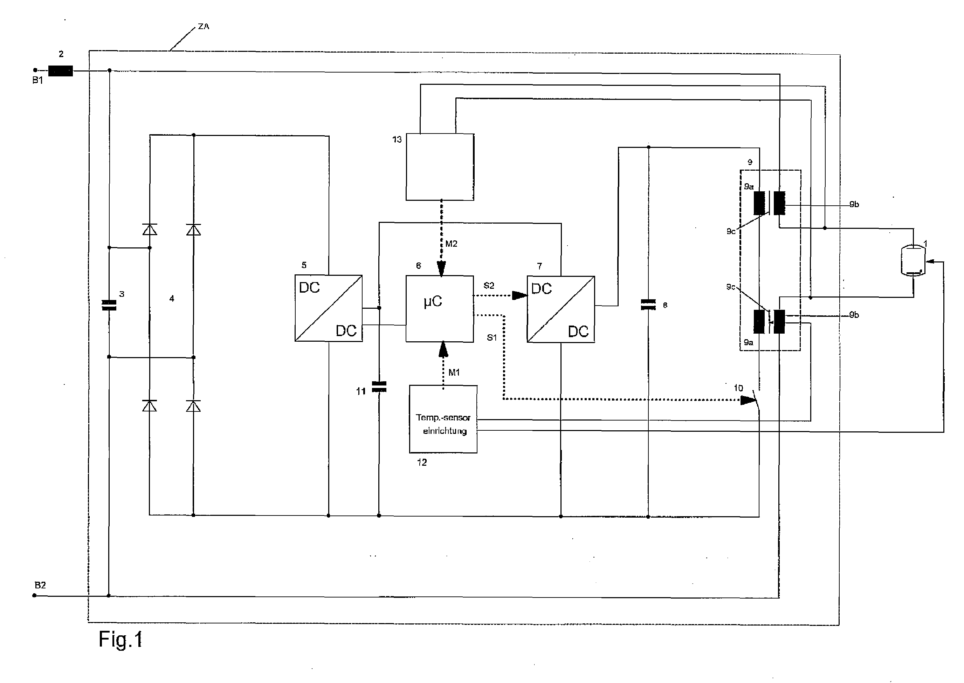

Eine erfindungsgemäße Zündschaltungsanordnung ZA ist in Figur 1 dargestellt. In der gezeigten Ausführungsform wird die Zündschaltungsanordnung ZA sowie'die Entladungslampe 1 über die Wechselstromanschlüsse B1, B2 gespeist. Diese Speisung kann beispielsweise direkt über ein Versorgungsnetz oder auch über einen gesteuerten Wechselrichter erfolgen. Seriell zur Lampe ist eine Drosselspule 2 vorgesehen. Ein parallel zur Lampe 1 angeordneter Kondensator 3 speist über den Gleichrichter 4 einen Spannungsregler 5, welcher aus der pulsierenden Gleichspannung eine Gleichspannung mit konstanter Ausgangsspannung zur Speisung der ausgangsseitig angeschlossenen Zündimpulsauslöseschaltung erzeugt.

Die Zündimpulsauslöseschaltung umfasst als wesentliche Bauteile einen mittels eines steuerbaren Gleichspannungswandlers 7 aufladbaren Stoßkondensator 8, welcher über die Primärspulen 9a eines Zündübertragers durch Schließen eines Schalters 10 entladen werden kann. Ein so erzeugter primärseitiger Impuls wird über den Spulenkern 9c, welcher in der beschriebenen Ausführungsform einen Ferritkern umfasst, auf die Sekundärspule 9b übertragen und damit der Versorgung der Lampe 1 als Zündimpuls überlagert.

Die beschriebene Zündschaltungsanordnung wird über einen Mikrocontroller 6 gesteuert, welcher über die Steuerleitung S1 den Schalter 10 zum Öffnen bzw. Schließen ansteuert. Ferner ist der Mikrocontroller 6 mit dem steuerbaren Spannungsregler 7 über die Steuerleitung S2 verbunden zum Festlegen der Ausgangsspannung des Reglers. Wie in der Zeichnung dargestellt, wird der Mikrocontroller auch von dem ersten Spannungsregler 5 versorgt.

Zur Steuerung der erfindungsgemäßen Zündschaltungsanordnung verwendet der Mikrocontroller Sensorinformation, die ihm von der Temperatursensoreinrichtung 12 bzw. von der Kapazitätsmesseinrichtung 13 über die digitalen Leitungen M1, M2 zugeführt wird. Die Temperatursensoreinrichtung 12 ist zum Erfassen der Ist-Temperatur des Zündübertragerkerns 9c sowie zum Erfassen der Ist-Temperatur der Lampe 1 ausgebildet. Hierzu sind entsprechende Temperaturfühler am Zündübertragerkern bzw. an der Lampe angebracht. Deren jeweiliges Sensorsignal wird von der Einrichtung 12 empfangen und zur Ermittlung der jeweiligen Temperatur verarbeitet. Die Temperaturfühler können je nach Ausführungsform beispielsweise als NTC, als PTC oder als PT100 ausgebildet sein. Prinzipiell sind alle Temperatursensoren einsetzbar, welche die notwendige Genauigkeit bei der Temperaturermittlung bereitstellen.

Die Einrichtung 13 ist zur Erfassung der Ist-Kapazität der Lampe 1 ausgebildet.

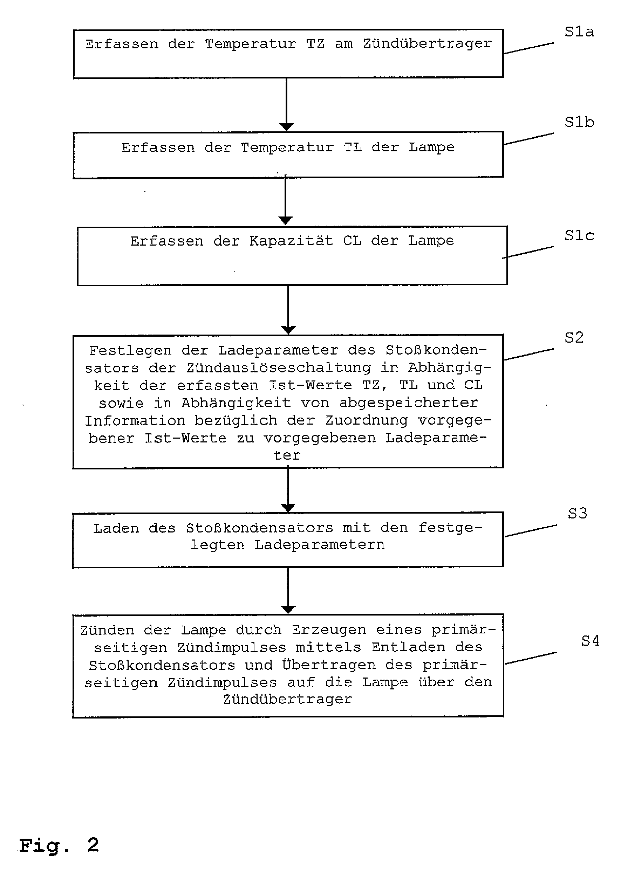

Die Betriebsweise der in Figur 1 dargestellten Ausführungsform wird im Folgenden mit Bezug auf das in Figur 2 dargestellte Flussdiagramm erläutert. Je nach Betriebssituation kann die Lampe nach einer längeren Betriebspause zu zünden sein, es kann jedoch auch der Fall vorliegen, dass nach einem längeren Betrieb der Lampe ein Ausschalten erfolgt und kurz danach die Lampe wieder betrieben werden soll. In der beschriebenen Ausführungsform der Erfindung ist die Zündschaltungsanordnung bzw. das zugeordnete Betriebsverfahren dazu ausgelegt, sowohl kalte als auch heiße Lampen sicher zu zünden, ohne dass elektronischen Bauteile der Anordnung bzw. die Lampe durch unnötig hohe Zündspannungen belastet werden.

Nachdem der Mikrocontroller den Befehl erhält, die Lampe wieder zu zünden, fragt dieser an der Temperatursensoreinrichtung 12 die Temperatur TZ am Zündübertrager 9 und die Temperatur TL an der Lampe 1 ab. In gleicher Weise fragt der Mikrocontroller 6 an der Kapazitätsmesseinrichtung 13 die Kapazität der Lampe 1 ab. Nach der Erfassung der angeforderten Ist-Werte werden diese über die Datenleitungen M1, M2 an den Mikrocontroller übermittelt, siehe die Schritte S1a, S1b, S1c in Figur 2.

In einer anderen Ausführungsform, werden in regelmäßigen Abständen diese Werte abgefragt, sodass sie beim Auftreten eines Zündbefehls schon vorliegen.

Im Mikrocontroller 6 ist in der beschriebenen Ausführungsform in einem vorgegebenen Speicherbereich Information bezüglich der Abhängigkeit der Ladeparameter des Stoßkondensators von den angegebenen Ist-Werten TZ, TL und CL abgelegt, sodass zu jedem ermittelten Wertetripel ein oder mehrere zugeordnete, vorbestimmte Ladeparameter von dem Mikrocontroller ermittelt werden können, mit welchen dann der nachfolgende Zündvorgang durchgeführt werden kann. Beispielsweise kann diese Information im Mikrocontroller in Form eines vierdimensionalen Datenfeldes hinterlegt sein, mit welchem den drei vorgegebenen Messgrößen Temperatur am Zündübertrager, Temperatur der Lampe und Kapazität der Lampe ein Wert für den zumindest einen Betriebsparameter der Zündschaltungsanordnung, wie beispielsweise die Ausgangsspannung des Reglers 6 zur Bereitstellung der Ladespannung des Stoßkondensators, zugewiesen wird, siehe Schritt S2 im Flussdiagramm gemäß Figur 2. Dabei können Zwischenwerte beispielsweise durch Interpolation ermittelt werden. In einer weiteren Ausführungsform kann der wenigstens eine Betriebsparameter der Zündschaltungsanordnung, in der beschriebenen Ausführungsform der zumindest eine Ladeparameter für den Stoßkondensator mittels eines in der Steuereinrichtung hinterlegten Polynoms ermittelt werden.

In der beschriebenen Ausführungsform werden die Angaben über die Temperatur und die Kapazität der Lampe verwendet, um die für diese Betriebsbedingungen notwendige Zündspannung festzulegen. Die Information über die Temperatur am Zündübertrager wird verwendet, um die Zündauslöseschaltung so zu betreiben, dass ein Zündimpuls mit der gewünschten Höhe an der Lampe 1 erzeugt wird.

Nachdem die Ladeparameter wie die Ladespannung und Ladezeit des Stoßkondensators feststehen, steuert der Mikrocontroller 6 den Spannungsregler 7 entsprechend an, siehe Schritt S3 in Figur 2. Danach kann die Zündung der Lampe gemäß Schritt S4 erfolgen.

In einer weiteren Ausführungsform der Erfindung können abhängig von den ermittelten Ist-Werten auch andere Betriebsparameter der Zündschaltungsanordnung eingestellt werden, beispielsweise die Kapazität des Stoßkondensators, die Anzahl aufeinander folgender Zündimpulse und/oder die Wartezeit zwischen zwei Zündversuchen oder eine Kombination von einigen oder allen Betriebsparameters der Zündschaltungsanordnung.

### Bezugszeichenliste

- 1: Lampe
- 2: Lampendrossel
- 3: Kondensator
- 4: Gleichrichter
- 5: Spannungsregler
- 6: Mikrocontroller
- 7: Steuerbarer Spannungsregler
- 8: Stoßkondensator
- 9: Zündübertrager
- 9a: Primärspule
- 9b: Sekundärspule
- 9c: Ferritkern
- 10: Steuerbarer Schalter
- 11: Kondensator
- 12: Temperatursensoreinrichtung
- 13: Kapazitätsmesseinrichtung
- B1, B2: Wechselstromversorgungsanschlüsse
- M1, M2: Datenleitungen
- S1, S2: Steuerleitungen
- ZA: Zündschaltungsanordnung

## Patentansprüche

1. Zündschaltungsanordnung (ZA) zum Zünden einer Entladungslampe (1), insbesondere einer Hochdrucklampe, und mit einer Steuereinrichtung (6) zum Zünden der Lampe, wobei eine Temperatursensoreinrichtung (12) zur Erfassung einer Temperatur vorgesehen ist sowie ein Speichermittel zum Speichern von Information bezüglich der Abhängigkeit wenigstens eines einzustellenden Betriebsparameters der Zündschaltungsanordnung von der erfassten Temperatur, **gekennzeichnet durch** eine Zündimpulsauslöseschaltung (7, 8, 9a, 10) und einem Zündübertrager (9), der primärseitig mit der Zündimpulsauslöseschaltung und sekundärseitig mit der Lampe verbunden ist, wobei die Zündimpulsauslöseschaltung eine Eingangsenergiequelle (7, 8) sowie ein Schaltermittel (10) aufweist, und wobei die Temperatursensoreinrichtung (12) zur Ermittlung der Temperatur am Zündübertrager (9) ausgebildet ist, und dass die Steuereinrichtung (6) ausgebildet ist, in Abhängigkeit von der ermittelten Temperatur am Zündübertrager und der abgespeicherten Information den wenigstens einen Betriebsparameter einzustellen.

2. Zündschaltungsanordnung (ZA) nach Anspruch 1, **dadurch gekennzeichnet, dass** die Zündimpulsauslöseschaltung (7, 8, 9a, 10) einen steuerbaren Spannungsregler (7) aufweist und die Steuereinrichtung (6) ausgebildet ist, die Ausgangsspannung des Spannungsreglers in Abhängigkeit der erfassten Temperatur am Zündübertrager (9) einzustellen.

3. Zündschaltungsanordnung (ZA) nach Anspruch 1 oder 2, **dadurch gekennzeichnet, dass** der Zündübertrager (9) in einem Gehäuse angeordnet ist, wobei zumindest ein Fühler der Temperatursensoreinrichtung (12) an oder in dem Gehäuse angeordnet ist.

4. Zündschaltungsanordnung (ZA) nach Anspruch 1, 2 oder 3, **dadurch gekennzeichnet, dass** ein Fühler der Temperatursensoreinrichtung (12) mit gutem Wärmekontakt am Zündübertrager (9), insbesondere am Kern (9c) des Zündübertragers angebracht ist.

5. Zündschaltungsanordnung (ZA) nach einem der Ansprüche 1 bis 4, **dadurch gekennzeichnet, dass** die Information im Speichermittel als Kennlinie, als Wertepaare, als Lookup-Tabelle oder als Polynom hinterlegt ist.

6. Zündschaltungsanordnung (ZA) nach einem der Ansprüche 1, 2 oder 5, **dadurch gekennzeichnet, dass** die Temperatursensoreinrichtung (12) zur Erfassung der Lampentemperatur ausgebildet ist.

7. Zündschaltungsanordnung (ZA) nach einem der Ansprüche 1 bis 6, **dadurch gekennzeichnet , dass** die Temperatursensoreinrichtung zwei unabhängig arbeitende Sensormittel zur Messung einer Temperatur am Zündübertrager und zur Messung der Lampentemperatur vorgesehen sind.

8. Zündschaltungsanordnung (ZA) nach einem der Ansprüche 1 bis 7, **dadurch gekennzeichnet , dass** ein Mittel vorgesehen ist zur Erfassung der Kapazität der Lampe (1).

9. Verfahren zum Betrieb einer Zündschaltungsanordnung (ZA) zum Zünden einer Entladungslampe (1), insbesondere einer Hochdrucklampe, wobei vorbestimmte Information bezüglich wenigstens eines in Abhängigkeit von einer Temperatur einzustellenden Betriebsparameters der Zündschaltungsanordnung gespeichert wird, **dadurch gekennzeichnet , dass** mittels einer Zündimpulsauslöseschaltung (7, 8, 9a, 10) ein primärseitiger Impuls erzeugt wird, welcher mittels eines Zündübertragers (9) transformiert und auf die Lampe übertragen wird, wobei ein Schalter der Zündimpulsauslöseschaltung zum Erzeugen des primärseitigen Zündimpulses angesteuert wird, und wobei die Temperatur am Zündübertrager ermittelt wird und eine Steuereinrichtung (6) in Abhängigkeit der ermittelten Temperatur am Zündübertrager und der abgespeicherten Information den wenigsten einen Betriebsparameter steuert oder regelt.

10. Verfahren nach Anspruch 9, **dadurch gekennzeichnet , dass** eine Temperaturabhängigkeit der Magnetisierung bzw. Permeabilität des Zündübertragers, insbesondere des Kerns (9c) des Zündübertragers kompensiert wird.

11. Verfahren nach einem der Ansprüche 9 und 10, **dadurch gekennzeichnet, dass** vor der Erzeugung des primärseitigen Zündimpulses ein Stoßkondensator aufgeladen wird, wobei die Aufladung in Abhängigkeit der ermittelten Temperatur am Zündübertrager durchgeführt wird.

12. Verfahren nach einem der Ansprüche 9 bis 11, **dadurch gekennzeichnet, dass** die Temperatur mittels einer Temperaturmessung benachbart zu oder am Zündübertrager (9) gemessen wird.

13. Verfahren nach einem der Ansprüche 9 bis 12, **dadurch gekennzeichnet, dass** die Temperatur mittels einer Temperaturmessung benachbart zu oder an der Lampe (1) gemessen wird.

14. Verfahren nach einem der Ansprüche 9 bis 13, **dadurch gekennzeichnet, dass** der wenigstens eine Betriebsparameter so eingestellt wird, dass der Einfluss der ermittelten Temperatur auf den Zündvorgang im Wesentlichen kompensiert wird.

15. Verfahren nach einem der Ansprüche 9 bis 14, **dadurch gekennzeichnet, dass** die Ausgangsspannung eines Spannungsreglers (7) zum Laden eines Stoßkondensators (8), die Kapazität des Stoßkondensators, die Anzahl aufeinanderfolgender Zündimpulse und/oder die Wartezeit zwischen zwei Zündversuchen in Abhängigkeit der ermittelten Temperatur am Zündübertrager eingestellt wird.

16. Verfahren nach Anspruch 9 bis 15, **dadurch gekennzeichnet, dass** die Temperatur am Zündübertrager und die Temperatur der Lampe mit unterschiedlichen Mitteln ermittelt werden und der wenigstens eine Betriebsparameter in Abhängigkeit der beiden ermittelten Temperaturen gesteuert oder geregelt wird.

17. Verfahren nach Anspruch 9 bis 16, **dadurch gekennzeichnet, dass** die Kapazität der Lampe (1) ermittelt wird und der wenigstens eine Betriebsparameter in Abhängigkeit der ermittelten Kapazität eingestellt, insbesondere gesteuert oder geregelt wird.
